# EUROPEAN PATENT APPLICATION

(11) **EP 1 061 501 A1**
(43) Date of publication of application: **20.12.2000**
(21) Application number: 00305109.1
(22) Date of filing: 16.06.2000
(51) Int. Cl.: G10H 1/34

(54) **Input apparatus for game systems**

(30) Priority: 18.06.1999 JP 17250399
(71) Applicant: Konami Co., Ltd., Tokyo (JP)
(72) Inventor: Nagata, Kenji, c/o Konami Co., Ltd, Tokyo (JP); Watanabe, Kaoru, c/o Konami Co., Ltd, Tokyo (JP); Atobe, Kouki, c/o Konami Co., Ltd, Tokyo (JP); Shimada, Terukazu, c/o Konami Co., Ltd, Tokyo (JP)
(74) Representative: Haley, Stephen

(57) **Abstract**

There is provided an input apparatus for game systems, which are simplified in construction. The input apparatus has a base (21) having a plurality of panel-attaching sections (26), a plurality of foot panels (50) arranged respectively at a plurality of panel-attaching sections (26), and tape switches (30) not only arranged between a panel supporting surface (27a) formed on each of a plurality of panel-attaching sections (26) and each of the foot panels but also outputting a predetermined detection signal responsively to changes in pushing load onto each foot panel (50). The tape switch (30) has a sensing element (31) and an elastic-material-made coating member (32) covering the sensing element (31) and functioning as a medium transmitting a load applied to each foot panel 50 to the sensing element (31). The coating element (32) supports the foot panel (50) by contacting with each foot panel (50) . Ribs (32a, 32b) are formed on the coating member (32), so that a load is intensively transmitted to a desired position on the sensing element (31).

## Description

The present invention relates to an input apparatus for game systems, which is usable as a foot switch and the like to be incorporated in a dancing game system.

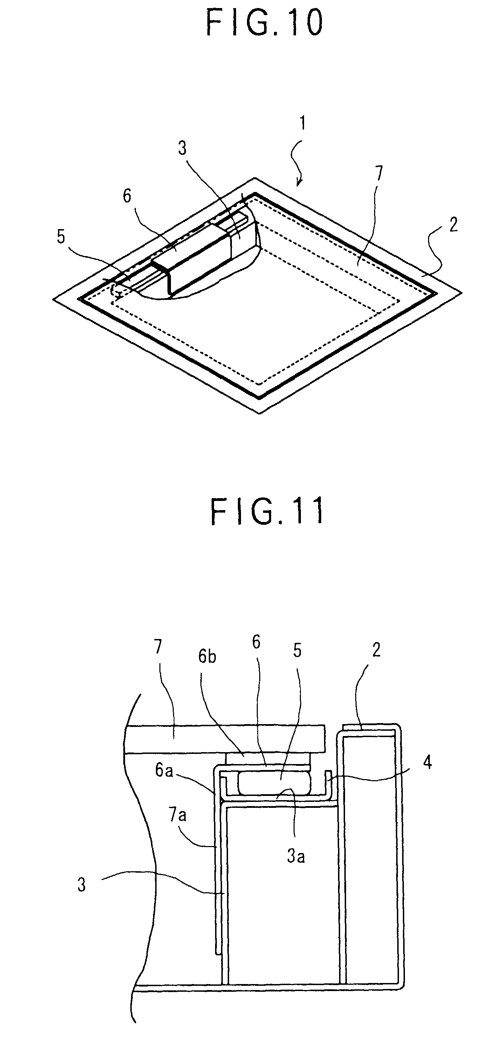

There has been known an input apparatus for game systems shown in Figs. 10 and 11. This input apparatus 1 is used to detect player's stamping actions, which has a configuration in which an inner frame 3 having a panel sustaining plane 3a is disposed on the inner circumference of an outer frame 2 formed into an approximate square. A cable switch 5 is arranged by way of a support plate 4 on the panel sustaining plane 3a. A switch bracket 6 is arranged above the cable switch 5 and an acrylic-material-made panel 7 is placed on the upper surface of the switch bracket 6. The cable swatch 5 is placed on each side of the panel 7.

The cable switch 5, of which surface is coated by rubber, has inner contacts that connect with each other and outputs a predetermined detection signal, when a load is applied to the coated rubber. The switch bracket 6 has a metal-made bracket body 6a attached displasably up and down against the inner frame 3 and a dumper 6b made to contact the panel 7. The panel 7 is supported at not-shown corner supporting members placed at the four corners and supported displasably up and down in contact with the switch bracket 6. The switch bracket 6 is arranged so that it faces the central portion in the longitudinal direction of the cable switch 5, and the width of the switch bracket is determined to a length corresponding to 1/3 to 1/2 of the whole length of the cable switch 5. Thus, when a player stamps the panel 7, its load intensively concentrates at the central portion of the cable switch 5 through the switch bracket 6. This enables the cable switch 5 to swell in sensitivity, so that a stamping action can steadily be detected even when the stapling load applied to the panel 7 is relatively light.

However, in the foregoing input apparatus 1, it is required that the rigidity of the switch bracket 6 be enhanced against deformation due to a large amount of load. Thus the switch bracket 6 rises in weight, resulting in that much handling care must be taken in manufacturing and maintenance. Additionally, there is a possibility that malfunctions of the apparatus may occur on account of the deformation or breakage of the switch bracket 6. Moreover, because the cable switch 5 is arranged on each side of the panel 7 one by one, four switch brackets 6 are always needed for each one panel 7, increasing manufacturing costs of the apparatus by an amount that is not necessarily negligible.

An object of the present invention is to provide an input apparatus used by a game system, where the configuration of the input apparatus is simplified thanks to omitting switch brackets.

In order to achieve the object, the present invention is configured as follows.

According to the invention of claim 1, the foregoing object is solved by an input apparatus for game systems comprising an operation member ; a supporting device for supporting the operation member in a predetermined direction; and a detection unit capable of outputting a predetermined detection signal in response to changes in load in the predetermined direction in relation to the operation member, wherein the detection unit has a sensing element and an elastic-material-made coating member not only coating the sensing element but also functioning as a medium to transmit the load applied to the operation member to the sensing element, wherein the coating member also functions as the supporting member by contacting with the operation member.

In this present invention, because the coating member arranged to the detection unit comes into contact with the operation member to support it, it is unnecessary to place, between the detection unit and the operation member, a member that corresponds to a conventional switch bracket. Thus the input apparatus is simplified in construction, handling care for manufacture and maintenance is reduced, the reliability of the apparatus is improved, and manufacturing costs are reduced. The supporting direction of the operation member by the supporting device includes a variety of directions, such as the vertical and horizontal directions. In other words, it is enough that the supporting device is able to receive a load applied in a predetermined direction to the operation member. The coating member may be fixedly in contact with the operation member to have a function of the supporting device. Alternatively, the coating member may have a function of the supporting device by mutually contacting the coating and operation members only when a load exceeding a predetermined value is applied to the operation member. In the latter, there may additionally be provided an auxiliary supporting device to support the operation member displaceably in the predetermined direction under the condition that both the coating and operation members are not in contact.

In the invention of claim 2, which is based on the input apparatus of claim 1, the coating member has protrusions for limiting a position to which the load toward the sensing element is transmitted into a certain range.

Accordingly, the protrusions of the coating member can be utilized to intensively transmit a load to a desired position on the detection unit, like a conventional switch bracket, thus increasing sensitivity in detection.

In the invention of claim 3, which is based on the input apparatus of claim 1, the sensing element of the detection unit includes one pair of band-like electrode plates that contacts to or separates from each other according to the load, and the coating member includes protrusions for limiting a position to which the load toward the sensing element is transmitted into a certain range positionally shifted from both longitudinal ends of the electrode plates into a central side thereof.

Accordingly, the protrusions of the coating member can be used to intensively transmit the load at a longitudinal central part of the electrode plates, thus providing a sensitive detection.

In the invention of claim 4, which is based on the input apparatus of either one of claim 2 or 3, the protrusions are arranged on an outer surface of the coating member.

Hence, a load applied to the operation member when the protrusions of the coating member come into contact with the operation member is intensively transmitted to a certain area on the coating member.

In the invention of claim 5, which is based on the input apparatus of either one of claim 2 or 3, the protrusion is arranged on an inner surface of the coating member. A load transmitted to the coating member is, therefore, intensively transmitted to a certain area of the sensing element by way of the protrusion.

In the invention of claim 6, which is based on the input apparatus of claim 1, there is further provided a stopper for limiting a displacement in relation to the predetermined direction of the operation member into a certain range.

Thus, if a load exceeding a predetermined limit is applied to the operation member, the operation member contacts with the stopper, resulting in that an overloaded input to the coating member is avoided. The reliability of the input apparatus is upgraded further.

In the invention of claim 7, which is based on the input apparatus of claim 5, at least an outer surface portion of the operation member is formed into a panel-like shape, the detection unit is disposed to make contact with the outer surface portion of the operation member, and the stopper is located nearer side to a center of the operation member than that of the detection unit.

Thus, because the stopper is arranged at an inner side to the detection unit, an amount of bend of the operation member at a contacted point with the detection unit can be suppressed to small, thereby steadily preventing an overload to the detection unit, compared to the configuration in which the stopper is arranged at an outer side to the detection unit. Moreover, an amount of bend of the central side of the operation member is restricted to small, thus increasing a feeling of rigidity is given to a player who pushes the operation member at central side. Thus, when the operation member is used as a foot panel on which a player stamps, a good feeling of stamping comparable to that on the floor of conventional architectures can be given to the players.

In the invention of claim 8, which is based on the input apparatus of claim 7, the stopper is adjoining the detection unit. As a result, the operation member, which comes into contact with the stopper, deflects at the contacted position serving as a support, wherein an amount of deflection of the operation member on the detection unit is limited to a minimum. Accordingly, an overloaded input to the detection unit can be avoided in a steady manner.

According to the invention of claim 9, the foregoing object is solved by an input apparatus for game systems comprising an input apparatus for game systems comprising a base having a plurality of panel-attaching sections ; a panel-like operation member arranged at each of the plurality of panel-attaching sections ; a detection unit located between a panel-supporting surface formed on each of the plurality of panel-attaching sections and the operation member and capable of outputting a predetermined detection signal in response to changes in pushing load applied to the operation member, wherein the detection unit has a sensing element and an elastic-material-made coating member not only coating the sensing element but also functioning as a medium to transmit the load applied to the operation member to the sensing element, wherein the coating member supports the operation member by contacting with the operation member.

Thus, like the claim 1 invention, since the coating member arranged to the detection unit comes into contact with the operation member to support it, it is unnecessary to place, between the detection unit and the operation member, a member that corresponds to a conventional switch bracket. Thus the input apparatus is simplified in construction, labor work for manufacture and maintenance is relieved, the reliability of the apparatus is improved, and manufacturing costs are reduced. Additionally, in this invention, the supporting direction of the operation member by the coating member includes a variety of directions, such as the vertical and horizontal directions. In other words, it is enough that the coating member comes into contact with the operation member and is capable to receive a load applied in a predetermined direction to the operation member. The coating member may be fixedly in contact with the operation member. Alternatively, the coating member may be made to contact the operation member only when a load exceeding a predetermined value is applied to the operation member. In the latter, there may additionally be provided an auxiliary supporting device to support the operation member displaceably in the predetermined direction when both the coating and operation members are not in contact.

In the invention of claim 10, which is based on the input apparatus of claim 9, the detection unit is made up of a plurality of detection units arranged at each panel-attaching section such that the operation member is supported at a plurality of points around an outer circumference thereof, and a stopper for limiting an amount of pushing operation toward the operation member is arranged at inside of each detection unit.

Thus, if a pushing load applied to the operation member exceeds a given value, the operation member comes into contact with a plurality of stoppers to be sustained between/among them. This also prevents an overload to the operation member.

In the invention of claim 11, which is based on the input apparatus of either one of claim 1 or 9, the operation member is composed as a foot panel on which a player is able to stamp. Accordingly, there can be provided a foot switch having various advantages; player's stamping actions are detectable, the apparatus is simplified in construction, manufacturing and maintenance are easier, the reliability is higher, and manufacturing costs are reduced.

In the accompanying drawings:
Fig.1 is a disassembled perspective view of a foot switch to which the present invention is applied;
Fig.2 is a longitudinal sectional view of the foot switch shown in Fig.1 ;
Fig.3 shows a plan view of a tape switch functioning as a detecting device used in the foot switch illustrated in Fig.1;
Fig.4A to 4C are perspective views, partially in section, showing the tape switch in Fig.3;
Fig.5 shows a perspective view of the external appearance of a game system in which the foot switch illustrated in Fig.1 is used;
Fig.6 is a plan view of a stool unit arranged in the game system of Fig.5;
Fig.7 exemplifies a modification of the tape switch shown in Fig.3;
Fig.8 exemplifies another modification of the tape switch shown in Fig.3;
Figs.9A and 9B are views representing examples of game images visualized on a monitor of the game system of Fig.5;
Fig.10 is a perspective view, partially in section, showing the configuration of a conventional foot switch; and

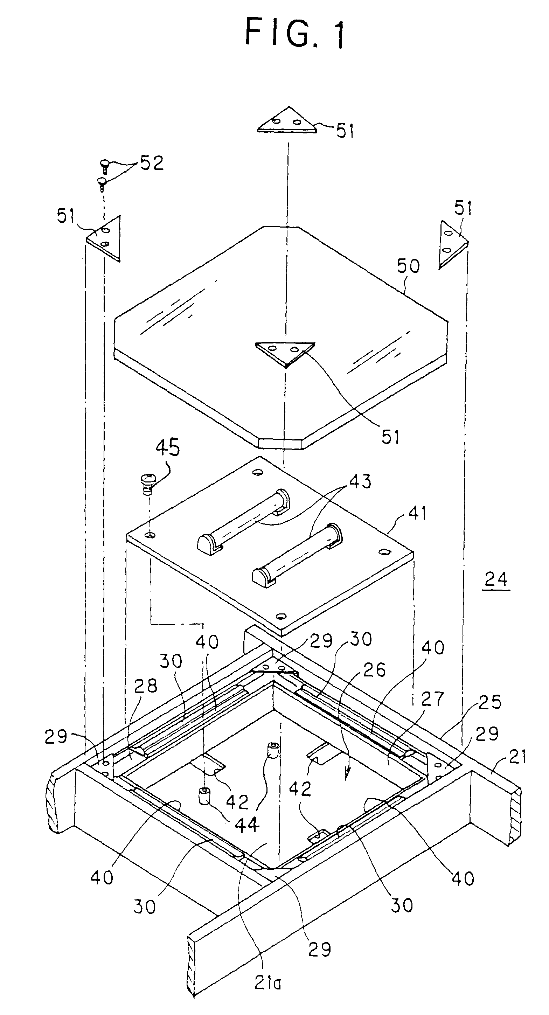

Fig.1 is a longitudinal sectional view of the foot switch shown in Fig.10.

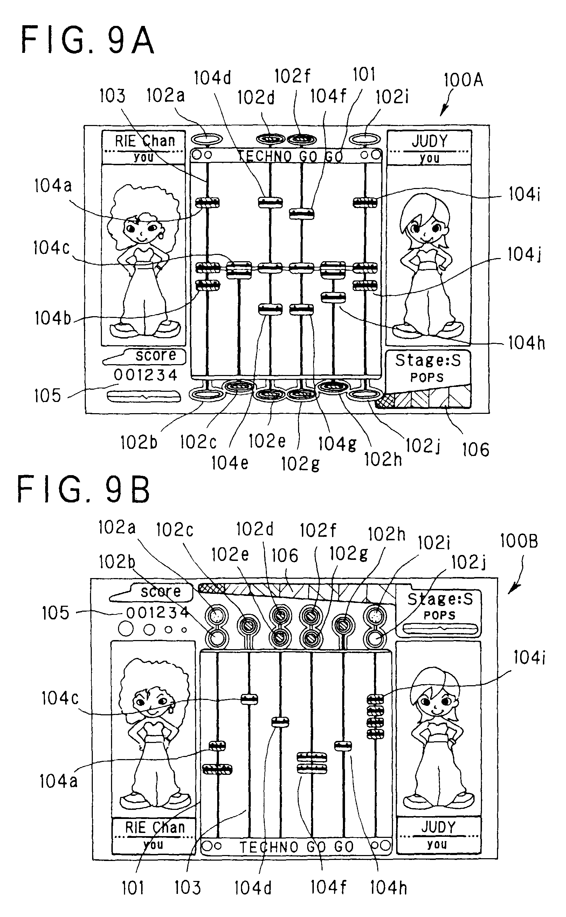

Referring to Figs. 1 to 9A and 9B, an embodiment of the present invention will now described.

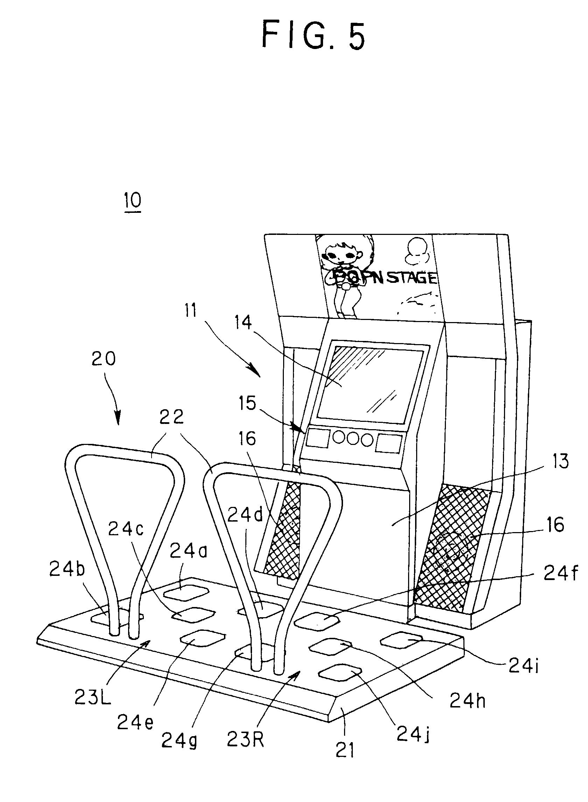

Fig.5 shows the external appearance of an arcade type of game system comprising an input apparatus according to the present invention. The game system 10 has a main unit 11 and a stool unit 20 placed on the floor in front of the main unit 11. The main unit 11 has a housing 13, a monitor 14 arranged at the upper front thereof, a body-side input apparatus arranged under the monitor 14, and speaker units 16,16 arranged at both the sides of the housing 13. The monitor 14 is located such that, when an adult having a standard height stands as a player on the stool unit 20, the monitor almost equals in height the player's eyes. Inside the housing 13, a controller (not shown) is placed, in which such devices as a CPU (central processing unit) and memory units are incorporated in combination to have necessary operations. The controller also controls game images visualized on the monitor 14 and music (including rhythm outputs) reproduced by the speaker units 16 in accordance with the programs of a game.

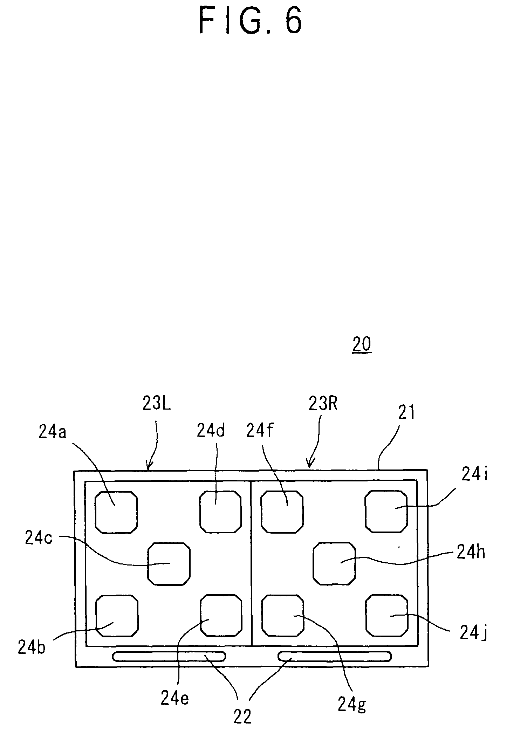

As shown in Fig.6, the stool unit 20 is provided with a base 21 and a pair of right and left handrails 22 disposed at the frontal end on the upper surface thereof. On the upper surface of the base 21, a pair of right and left rectangular dancing areas 23L and 23R is defined. In each of the dancing areas 23L and 23R, five foot switches 24a to 24e ,24f to 24j are disposed. Specifically, one foot switch 24c ,24h is located at the center of each dancing area 23L, 23R, while the remaining four foot switches 24a, 24b, 24d , 24e (24f, 24g, 24i and 24j) are individually located at the four comers of each dancing area 23L ,23R. This way of disposing these foot switches 24a to 24j is just one example, and such an arrangement can be changed appropriately in compliance with game contents. Because each foot switch 24a (to 24j) is constructed in the same way, these foot switches will be representatively denoted as a foot switch 24 in the following explanation, unless they are required to be distinguished from each other.

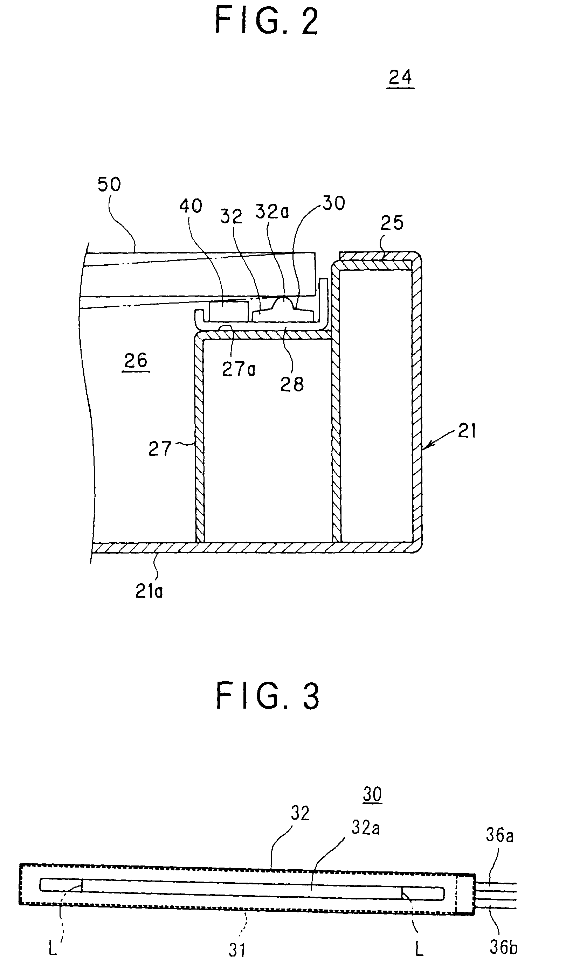

Figs. 1 and 2 show the configuration of a foot switche 24. The foot switch 24 is arranged to detect a player's stamping action. Through the base 21, approximately square panel-attaching sections 26 surrounded by an outer frame 25 are formed, and in the inside of each panel-attaching section 26, an approximate square inner frame 27 is displaced so as to surround the sections 26. The upper surface of the inner frame 27 is formed into a panel-supporting surface 27a that is lower in height than that of the outer frame 25. A sustaining plate 28 is attached on the overall panel-supporting surface 27a. Both the side edges of the sustaining plate 28 are folded back upward. Moreover, at the four corners of the inner frame 27, comer plates 29, ..., 29 are located. The foregoing outer frame 25, inner frame 25, sustaining plate 28 and comer plates 29 are manufactured by sheet metal processing. Both the sustaining plate 28 and the corner plates 29 are integrated through the sheet metal processing. In contrast, the sustaining plate 28 and corner plates 29 may be formed into individual members separated from each other.

A tape switch 30, which functions as a detection unit, is attached on a central part of each side of the inner frame 27 with the sustaining plate 28 inserted therebetween. A stopper 40 is located next to each tape switch 30 at an inside position thereto. A nearly square-shaped foot panel 50 serving as an operation member is disposed so that it covers tape switches 30 and stoppers 40. The foot panel 50 is made from semi-transparent acrylic resin.

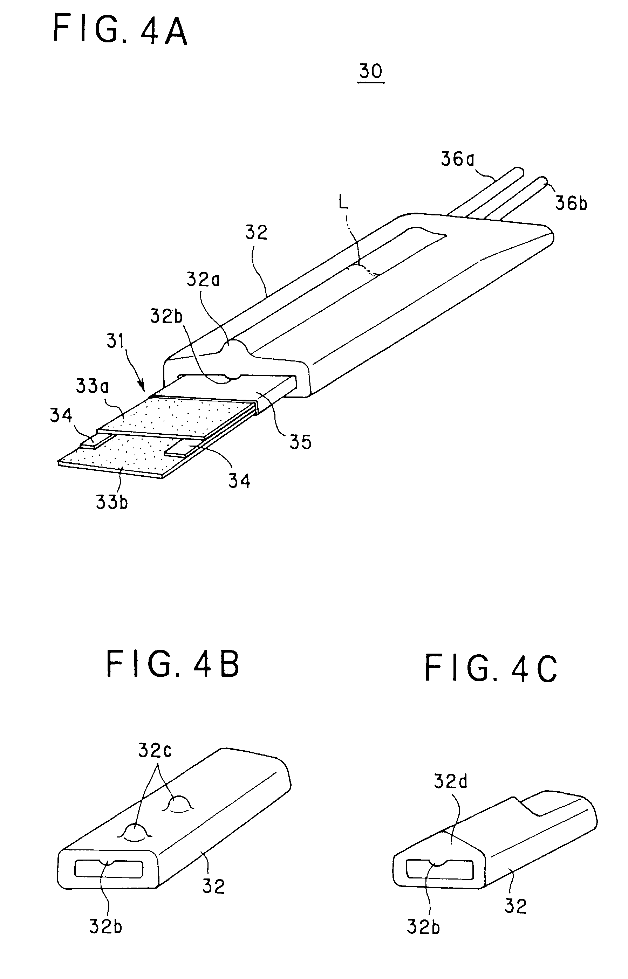

As shown in Figs.3 and 4A, the tape switch 30 has a sensing element 31 and a coating member 32 covering the sensing element31. The sensing element 31 has one pair of metallic electrode plates 33a and 33b mutually facing via one pair of insulating-material-made spacers 34 and 34 disposed at both the side ends of the plates and a protective film 35 enclosing those elements. The protective film 35 is formed by, for example, a heat shrink film. One end of each of the electrode plates 33a and 33b is connected to each of leads 36a and 36b to detect electric conduction between the plates. The coating member 32 is formed by elastic materials such as higher elastic rubber. At a central part in the width direction of both the upper surface and the inner surface (which faces the electrode plate 33a) of the coating member 32, ribs 32a and 32b functioning as protrusions are formed, respectively. Accordingly, when a load is applied downward to the rib 32a, the load acts on a lateral central part of the electrode plate 33a by way of the rib 32b, resulting in that the electrode plate 33a undergoes a downward deflection with the spacers 34 and 34 using as fulcrums. When this deflection accomplishes a predetermined amount of deformation, the electrode plates 33a and 33b come into contact with each other, realizing electric conduction between the leads 36a and 36b. Changing the thickness of the spacers 34 allows the sensitivity of the switch 30 to be adjusted.

The stopper 40 is constructed with elastic materials, such as urethane, of relatively higher values of rigidity. As clearly shown in Fig.2, the stopper 40 is, to a certain degree, lower in height than the tape switch 30. Thus, in the no-load state under which a player does not exist on the foot panel 50, the outer circumference of the foot panel 50 comes into contact with the rib 32a of each tape switch 30, so that the support in the up and down direction is accomplished. In the case that a player stamps onto the foot panel 50, the resulting stamping load is transmitted to the sensitive element 31 through the ribs 32a and 32b, causing the electrode plates 33a and 33b to make contact with each other. In consequence, detecting whether or not conduction occurs between the leads 36a and 36b makes it possible to determine if a stamping action on the foot panel 50 has been made or not. Additionally, the lengths of the ribs 32a and 32b is set such that they are shorter than the electrode plates 33a and 33b. This permits the load transmitted through the ribs 32a and 32b to concentrate on a longitudinal central part of the electrode plate 33a, leading to a steady detection of the load by the sensitive element 31 even when a small amount of load is applied to the foot panel 50.

When applying a load exceeding a predetermined limit to the foot panel 50, the stopper 40 and the panel 50 come into contact with each other, preventing from a further displacement of the panel 50. Thus an overlord toward the tape switch 30 is avoided, with the result that its longevity and reliability are improved. Because the stopper 40 is located adjacently to the tape switch 30 at an inner-side position thereto, the foot panel 50 is bent downward as shown by double-dotted chain lines in Fig.2. This confines the tape switch 30 to a small amount of indentation when it makes contact with the stopper 40. An overload onto the tape switch 30 can therefore be avoided in a steady manner.

Incidentally, in the case that the stopper 40 is attached on the outer side of the tape switch 30 or on the corner plate 29, a displacing amount of the foot panel 50 during the period from the non-load state to the contact made between the stopper 40 and the foot panel 50 becomes larger at the position of the tape switch 30 than at that of the stopper 40. This leads to a fear that the load applied to the tape switch 30 is not restricted to a small quantity. In addition, when the stopper 40 is located at an outer side to the tape switch 30, a distance from the stopper 40 to the center of the foot panel 50 is more increased, compared to the occasion where the stopper 40 is located at an inner side to the tape switch 30. This causes a fear that a maximum deflection amount in the central area of the foot panel 50 (a sinking amount caused by stamping) increases and a feeling of stamping is deteriorated. In contrast, when the stopper 40 is located at an inner side to the tape switch 30, the maximum deflection amount at the central area of the foot panel 50 is decreased, swelling a feeling of rigidity that a player feels when stamping onto the foot panel 50. This provides players with a feeling of stamping comparable to dancing on the floor of general architectures.

As the tape switch 30 mentioned so far, a STARTAPE (registered trademark in Japan) available from MITSUBOSHI BELTING LTD. can be used, for instance. If the ribs 32a and 32b commercially available are used and are longer than a predetermined length, an additional work may be performed such that both the ends of the rib 32a are cut down to shorten the length, as shown by two-dotted chain lines L in Figs.3 and 4A. In such a case, either one of the rib 32a or 32b may be omitted. The ribs 32a and 32b are not restricted to ones having an arch-like section, but ribs of a triangular or trapezoidal section may be used. Instead of the ribs 32a and 32b, a plurality of separated island-like protrusions 32c can be arranged at intervals in the longitudinal direction of the switch 30, as shown in Fig.4B, for instance. Alternatively, as shown in Fig.4C, the coating member 32 is able to have an protrusion 32d by forming the upper or inner surface into an angle-like shape that increases in an amount of protrusion as going from both the lateral ends to the lateral center. Although the stopper 40 and the tape switch 30 are depicted in the drawings as being approximately identical in length to each other, the length of the stopper 40 may be shorter or longer than that of the tape switch 30.

As clear from Fig. 1, a control substrate 41 is disposed in the inner space of the inner frame 27. The control substrate 41 is placed on four female screw studs 44, ..., 44 (only two of them are shown in Fig. 1) secured on the upper surface of the bottom plate 21a of the base 21, so that the control substrate 41 is sustained at a separated position over the bottom plate 21a. Screws 45 are applied to the female screw studs 44 on the upper surface of the control substrate 41, securing the control substrate 41 on the studs 44. On the upper surface of the control substrate 41, a single pair of cold cathode tubes 43 and 43 is placed as means for lighting the foot switch 24 from the inside thereof. Provided on the control substrate 41 are a switch circuit being connected with the leads 36a and 36b of the tape switch 30 and transmitting to a controller of the game system 10 a signal corresponding to conduction states between the leads and a lighting control circuit controlling the lighting of the cold cathode tubes 43. A reflective layer is also coated on the upper surface of the control substrate 41 so that it reflects light illuminated by the cold cathode tubes 43. The reflective layer is formed, for example, by coloring in white the entire upper surface of the substrate 41 through silk printing. Drainage holes 42, ...,42 are formed through the bottom plate 21a.

The four corners of each foot panel 50 are cut out to avoid interference with the corner plates 29, in other words, to retreat toward the central side of the panel-attaching section 26 from the comer plates 29. After the foot panel 50 is attached to the panel-attaching section 26, anti-dislocating covers 51, ..., 51 are set on the four cut-out corners. Applying screws 52 and 52 to each corner plate 29 through each cover 51 permits both the plate and the cover to couple with each other, preventing the foot panel 50 from dislocating upward. The upper surface of the foot panel 50 which has an anti-dislocating mechanism using the covers 51 become low in height to some extent than that of the outer frame 25.

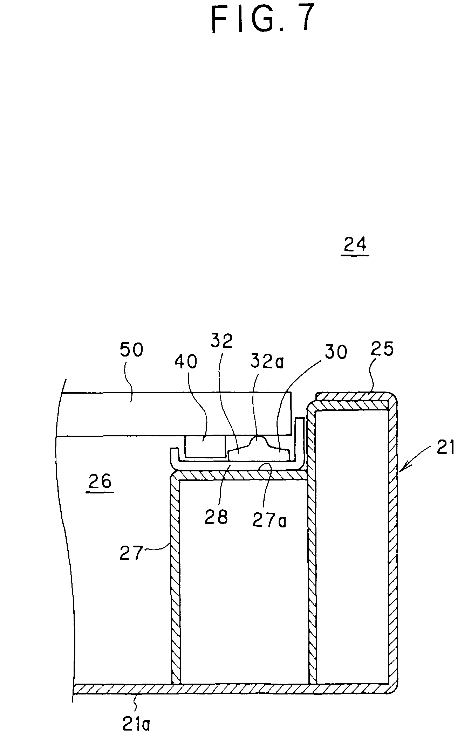

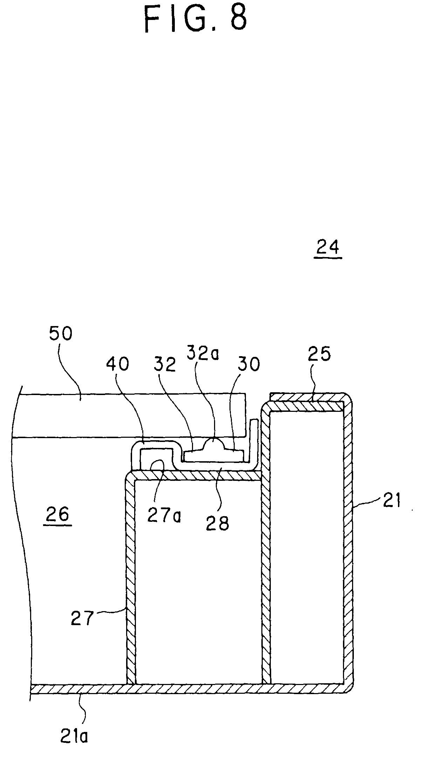

Alternatively, as depicted in Fig.7, the stopper 40 may be attached on the foot panel 50. Furthermore, as depicted in Fig.8, the sustaining plate 28 may be bent to form an integral unit with the stopper 40. Alternatively, the inner frame 27 can be formed as a single member with the stopper 40.

Fig.9A exemplifies a game image displayed on the monitor 14 of the game system 10. In the central area of a game image 100A, displayed is a guide gauge 101 for guiding a player in procedures of dancing, more practically, procedures of stamping on the foot switches 24a to 24j in accordance with the dancing music. The upper and lower regions outside the area of the guide gauge 101 include elliptical symbols 102a to 102j each made to correspond to the foot switches 24a to 24j. In the inside of the guide gauge 101, each line 103 (..., 103) is displayed correspondingly to each symbol 102a (..., 102j). The symbols 102a to 102j are differentiated in color to facilitate mutual distinctions, and each foot panel 50 of the foot switches 24a to 24j is colored in the same hue as a corresponding one of the symbols 102a to 102j.

In response to the start of the game, dancing music selected by a player is reproduced by the speaker units 16, and concurrently timing marks 104a to 104j appear in a central region in the vertical direction of the guide guage 101 with each line 103 matched in position, according to predetermined procedures in synchronous with the music. The timing marks 104a to 104j are colored in the same hue as corresponding symbols 102a to 102j. The timing marks 104a to 104j are scrolled toward the upper or lower ends of the guide gauge 101 along the lines 103 as the music proceeds. If the player stamps on any of the foot switches 24a to 24j corresponding to the marks 104a to 104j at the time when any of the marks 104a to 104j reaches the upper or lower end of the guide guage 101, the stamping action is detected by the foregoing tape switch 30 so that a predetermined detection signal is supplied to the controller of the game system 10. In the controller, both the time when the tape switch 30 detected the stamping action and the time when any of the marks 104a to 104j reached the upper and lower end of the guide gauge 101 are compared with each other, the player's dancing steps are evaluated in terms of time lag. The smaller the time lag, the higher the appreciation for the player's stamping action.

Depending on the evaluated result of the stamping actions, gauge amounts indicated by a level gauge 106 change and scores displayed on a score board 105 change. Given conditions for a piece of music (for example, the gauges in the level gauge 106 indicate amounts more than predetermined levels) are met, the music is cleared to go on to playing the next piece of music. If the conditions are not fulfilled, the game is over.

Fig.9B shows another example of a game image. In this image 100B, the symbols 102a to 102j are located in the upper end portion of the guide gauge 101, in which each pair of the symbols 102a and 102b, 102d and 102e, 102f and 102g, and 102i and 102j are made to correspond to the same line 103, respectively. Additionally, in the inside of the gauge 101, the timing marks 104a, 104c, 104d, 104f, 104h and 104i are scrolled from the lower end to the upper end in accordance with the progress in the music. At the time when the timing marks 104a, 104c, 104d, 104f, 104h and 104i reach the upper end of the gauge 101, timing for stamping the foot swithes 24a to 24j that correspond to the marks is also realized. As to the timing marks 104a, 104d, 104f and 104i, there are two cases; only one mark is displayed at the same position in the line 103, while two marks are displayed in parallel at the same position in the line 103. Depending on the cases, it is required that a player takes a different action. For instance, when the mark 104a displayed alone in the left line 103 reaches the upper end of the gauge 101, it is required that a player stamps selectively onto the foot switches 24a and 24b that made to correspond to the symbols 102a and 102b. On the other hand, in the case that two marks 104a and 104a are displayed in parallel in the left line 103 and those marks 104a arrive at the upper end of the gauge 101, it is required that a player stamps, at a time, onto the foot switches 24a and 24b made to correspond to the symbols 102a and 102b.

In the foregoing game system 10, the four tape switches 30 are disposed in each foot switch 24. Depending on a position where the foot panel 50 is stamped, there are some cases that the stamping action is detected by only part of the tape switches 30 in the foot panel 50, but not detected by the remaining part thereof. The controller of the game system may employ a manner that the four tape switches 30 for each foot switch 24 are not distinguished from each other. For example, when one or more tape switches 30 for each foot switch 24 detect a stamping action, processing may be done as if the entire foot switch 24 was stamped. Alternatively, when the on and off states of the four tape switches 30 of each foot switch 24 are individually monitored, processing may be performed differently according to which tape switch 30 detects a stamping action. By way of example, a stamping action is evaluated differently between one case that all the tape switches 30 detect the action and the other case that only part of the tape switches 30 detects the action.

The present invention is not limited to the configurations explained by the foregoing embodiments, but may be modified into various other modes. The input apparatus according to the present invention is not confined to the mode used as a foot switch, but can be used as other forms. For example, the input apparatus can be used in a form that it detects player's indentation performed by the fingers or fist. In addition, the directions of the indentation are not always limited to the up and down directions, but may be set to the horizontal or any other directions. Although only the presence or absence of actions of indentation was detected utilizing the tape switch in the foregoing embodiments, the largeness of loads caused by actions of indentation can be obtained using a detection unit capable of supplying a signal corresponding to the magnitudes of the loads. The operation member is not restricted to an approximately square flat-panel member, but it may be formed into various shapes including a disk-like or ellipsoidal shape. As concerning the operation member, it is enough that only part of the operation member which comes in contact with the detection unit is shaped into a flat panel configuration. In the above embodiment, the tape switch serving as a detection unit was arranged on each side of the square panel, but the relationship between the arrangement of the detection unit and the operation member may be altered appropriately; for example, the tape switch is arranged on only a single pair of opposed sides of the panel.

As described above, because the coating member disposed so as to cover the sensing elements of the detection unit is made to contact the operation member to support the operation member, it is not required that another member for transmitting loads be placed between the detection unit and the operation member. This leads to a simplified configuration of the input apparatus, and lessened labor work necessary for the manufacture and maintenance, an increase in reliability of the input apparatus, and reduced manufacturing costs. Particularly, in cases protrusions are attached to the inner and outer surfaces of the coating member, loads applied to the operation member are intensively transmitted to a desired position on each sensing element, thus raising sensitivity in detection. Additionally, arranging the stopper to limit displacements of the detection unit prevents the detection unit from receiving an overload, thereby increasing further the reliability of the input apparatus. Especially, when the stopper is arranged at an inner side to the detection unit, the deflection of the operation unit at a contacted position with the detection unit can be suppressed to a small amount of deflection, thus steadily preventing the overload. Concurrently, an amount of deflection arising at the center of the operation member is suppressed to a small value, so that a feeling of rigidity given a player who handles the operation member is enhanced. Therefore, a feeling of rigidity experienced when operating the operation member becomes appropriate for a necessary input apparatus. For instance, when using the operation member practiced in the form of a foot panel, a player is able to have an operation feeling comparable to stamping the floor in general architectures.

## Claims

1. An input apparatus for game systems comprising:
an operation member;
a supporting device for supporting the operation member in a predetermined direction; and
a detection unit capable of outputting a predetermined detection signal in response to changes in load in the predetermined direction in relation to the operation member,
wherein the detection unit has a sensing element and an elastic-material-made coating member not only coating the sensing element but also functioning as a medium to transmit the load applied to the operation member to the sensing element, wherein the coating member also functions as the supporting member by contacting with the operation member.

2. The input apparatus of claim 1, wherein the coating member has a protrusion for limiting a position to which the load toward the sensing element is transmitted into a certain range.

3. The input apparatus of claim 1, wherein the sensing element of the detection unit includes one pair of band-like electrode plates that contacts to or separates from each other according to the load, and the coating member includes a protrusion for limiting a position to which the load toward the sensing element is transmitted into a certain range positionally shifted from both longitudinal ends of the electrode plates into a central side thereof.

4. The input apparatus of either one of claim 2 or 3, wherein the protrusion is arranged on an outer surface of the coating member.

5. The input apparatus of either one of claim 2 or 3, wherein the protrusion is arranged on an inner surface of the coating member.

6. The input apparatus of claim 1, further comprising a stopper for limiting a displacement in relation to the predetermined direction of the operation member into a certain range.

7. The input apparatus of claim 5, wherein at least an outer surface portion of the operation member is formed into a panel-like shape, the detection unit is disposed to make contact with the outer surface portion of the operation member, and the stopper is located nearer side to a center of the operation member than that of the detection unit.

8. The input apparatus of claim 7, wherein the stopper is adjoining the detection unit.

9. An input apparatus for game systems comprising:
a base having a plurality of panel-attaching sections;
a panel-like operation member arranged at each of the plurality of panel-attaching sections;
a detection unit located between a panel-supporting surface formed on each of the plurality of panel-attaching sections and the operation member and capable of outputting a predetermined detection signal in response to changes in pushing load applied to the operation member,
wherein the detection unit has a sensing element and an elastic-material-made coating member not only coating the sensing element but also functioning as a medium to transmit the load applied to the operation member to the sensing element,
wherein the coating member supports the operation member by contacting with the operation member.

10. The input apparatus of claim 9, wherein the detection unit is made up of a plurality of detection units arranged at each panel-attaching section such that the operation member is supported at a plurality of points around an outer circumference thereof, and a stopper for limiting an amount of pushing operation toward the operation member is arranged at inside of each detection unit.

11. The input apparatus of either one of claim 1 or 9, wherein the operation member is composed as a foot panel on which a player is able to stamp.
